# EUROPEAN PATENT SPECIFICATION

(11) **EP 3 584 200 B1**
(45) Date of publication and mention of the grant of the patent: **10.11.2021**
(21) Application number: 18753622.2
(22) Date of filing: 24.01.2018
(51) Int. Cl.: B65G 15/08, B65G 15/60, B65G 45/26, B65G 45/18, B65G 45/22, B65G 45/24

(54) **AIR-SUPPORTED BELT CONVEYOR DEVICE**
LUFTGELAGERTE BANDFÖRDERVORRICHTUNG
DISPOSITIF DE BANDE TRANSPORTEUSE SUPPORTÉ PAR AIR

(30) Priority: 15.02.2017 JP 2017025635
(43) Date of publication of application: 25.12.2019
(73) Proprietor: Kawasaki Jukogyo Kabushiki Kaisha, Kobe-shi, Hyogo 650-8670 (JP)
(72) Inventor: ODAGIRI, Takashi, Kobe-shi, Hyogo 650-8670 (JP)
(74) Representative: Dehns
(86) International application number: PCT/JP2018/002052
(87) International publication number: WO 2018/150818

(56) References cited:
- JP-A- H1 111 642
- JP-A- H09 194 011
- JP-A- 2000 062 928
- JP-A- 2001 294 313
- JP-A- 2002 302 224
- JP-A- 2016 124 633
- JP-B2- 3 485 407
- JP-U- S53 161 486

## Description

### Technical Field

The present invention relates to an air floating belt conveyor apparatus configured to convey bulk materials, such as coal.

### Background Art

As a belt conveyor apparatus configured to smoothly convey bulk materials (hereinafter referred to as "conveyed materials"), such as coal, gypsum, and wet ash in thermal power plants, and iron ore and auxiliary raw materials in iron mills, an air floating belt conveyor apparatus effective for countermeasures against dust and noise is known in recent years. PTL 1 describes one example of the air floating belt conveyor apparatus. PTL 2 discloses an air floating belt conveyor according to the preamble of claim 1.

In the air floating belt conveyor apparatus described in PTL 1, gutter-shaped troughs are provided at respective carrier and return routes of a conveyor belt, and the conveyor belt passes on the troughs. A large number of air outlets are formed at bottom portions of the troughs, and air supply headers (air ducts) extending along the troughs are provided so as to cover the air outlets from below. Air pressure-fed to the air supply headers flows out through the air outlets to between the conveyor belt and each trough to make the conveyor belt float.

### Citation List

### Patent Literature

PTL 1: Japanese Laid-Open Patent Application Publication No. 11-11642
PTL 2: JP 3 485 407 B2

### Summary of Invention

### Technical Problem

The inventors of the present application have confirmed the accumulation of the dust in the air supply header of the air floating belt conveyor apparatus which was installed several years ago. However, skilled persons commonly recognize that since a gap between the floating conveyor belt and the trough is very small, and the air flows out from the gap, the dust of the conveyed materials hardly gets into the air supply header through between the conveyor belt and the trough. Therefore, the conventional air floating belt conveyor apparatus does not have means for removing the dust accumulated inside the air supply header.

The present invention was made in view of the above circumstances, and an object of the present invention is to provide an air floating belt conveyor apparatus including means for removing dust accumulated inside an air supply header.

### Solution to Problem

An air floating belt conveyor apparatus of the present invention includes: a conveyor main body including an endless conveyor belt and configured to convey conveyed materials, placed on a conveyance surface of the conveyor belt, in a predetermined direction; a carrier route belt supporting body supporting a carrier route portion of the conveyor belt from below and including a plurality of air outlets through which air for making the conveyor belt float flows out to between an upper surface of the carrier route belt supporting body and a non-conveyance surface of the conveyor belt; at least one air supply header including a header chamber communicating with the plurality of air outlets, the at least one air supply header being provided at a lower portion of the carrier route belt supporting body; a blower configured to supply the air to the air supply header; a duct forming a discharge passage, the discharge passage connecting an inlet and an outlet, the inlet being open at the header chamber, the outlet being open on the upper surface of the carrier route belt supporting body and located higher than the conveyance surface of the conveyor belt, dust accumulated in the header chamber being introduced by the discharge passage from the inlet to the outlet; and an opening/closing device configured to open and close the discharge passage.

In the above air floating belt conveyor apparatus, when the opening/closing device is operated to open the discharge passage, and the air is supplied to the header chamber by the blower, the dust accumulated in the header chamber flies by the flow of the air and is discharged through the discharge passage to an upper side of the conveyance surface of the conveyor belt in accordance with the flow of the air. The discharged dust falls on the conveyance surface of the conveyor belt and is conveyed by the conveyor belt together with the conveyed materials. As above, the air floating belt conveyor apparatus includes means for removing the dust accumulated inside the air supply header (header chamber).

In the above air floating belt conveyor apparatus, the carrier route belt supporting body may have a circular-arc cross section perpendicular to a conveyance direction of the conveyed materials, and the duct may form the discharge passage extending in a circular-arc shape along a circular-arc outer periphery of the carrier route belt supporting body.

With this, the discharge passage is a circular-arc passage extending from the inlet at a lower side to the outlet at an upper side. Therefore, the air flowing through the discharge passage and the dust that moves together with the air are smoothly carried to the outlet to be discharged from the outlet.

The above air floating belt conveyor apparatus may further include: a return route belt supporting body located under the carrier route belt supporting body and supporting a return route portion of the conveyor belt; and a belt inversion mechanism configured to invert the conveyor belt such that the conveyance surface of the conveyor belt passing through the return route belt supporting body faces upward.

The dust conveyed by the conveyor belt together with the conveyed materials separates from the conveyance surface of the conveyor belt at a turn portion of the conveyor belt. However, minute dust may be adhered to the conveyance surface and therefore may not separate from the conveyance surface. Even in such a case, the conveyor belt is inverted such that the conveyance surface of the conveyor belt passing through the return route belt supporting body faces upward. Therefore, the dust can be prevented from being adhered to or falling on an upper surface of the return route belt supporting body.

### Advantageous Effects of Invention

The present invention can provide an air floating belt conveyor apparatus including means for removing dust accumulated in an air supply header (header chamber).

### Brief Description of Drawings

Fig. 1 is a schematic diagram of an air floating belt conveyor apparatus according to one embodiment of the present invention.
Fig. 2 is a schematic diagram showing a cross section of the air floating belt conveyor apparatus, the cross section being perpendicular to a conveyance direction of conveyed materials.
Fig. 3 is a schematic diagram showing a cross section of a carrier route trough and an air supply header, the cross section being parallel to the conveyance direction of the conveyed materials.

### Description of Embodiments

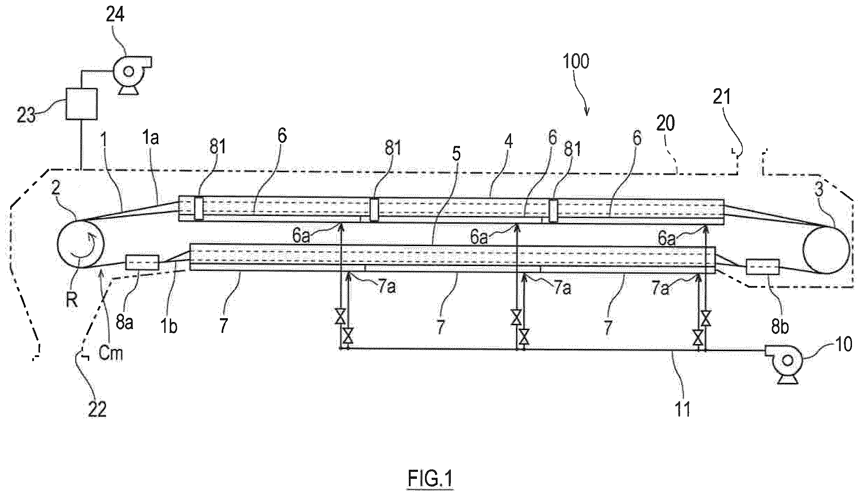

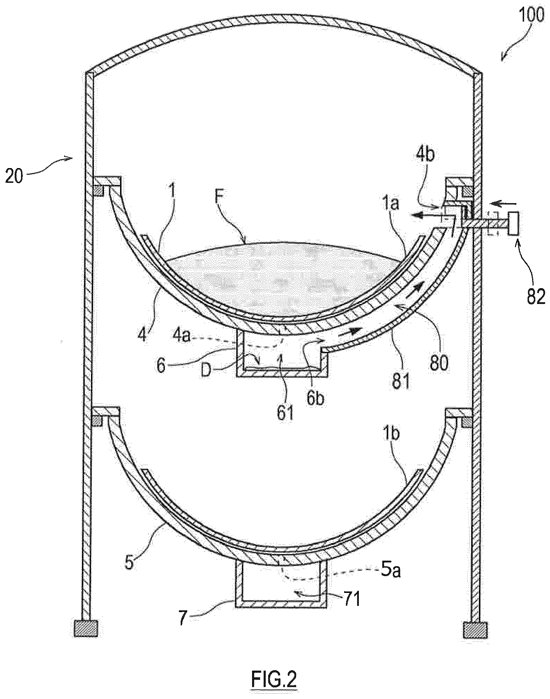

Next, an embodiment of the present invention will be explained with reference to the drawings. Fig. 1 is a schematic diagram of an air floating belt conveyor apparatus 100 according to one embodiment of the present invention. Fig. 2 is a schematic diagram showing a cross section of the air floating belt conveyor apparatus 100, the cross section being perpendicular to a conveyance direction of conveyed materials F. In Fig. 1, a casing 20 is transparent, and an internal structure of the air floating belt conveyor apparatus 100 is shown.

As shown in Figs. 1 and 2, the air floating belt conveyor apparatus 100 includes a conveyor main body Cm, a carrier route belt supporting body (hereinafter referred to as a "carrier route trough 4"), a return route belt supporting body (hereinafter referred to as a "return route trough 5"), air supply headers 6 and 7, and a blower 10. The air supply headers 6 are provided at the carrier route trough 4, and the air supply headers 7 are provided at the return route trough 5. The blower 10 pressure-feeds air to the air supply headers 6 and 7.

The conveyor main body Cm is constituted by an endless conveyor belt 1, a driving pulley 2, a driven pulley 3, a motor (not shown), and the like. The conveyor belt 1 is wound between the driving pulley 2 as a head pulley and the driven pulley 3 as a tail pulley. The driving pulley 2 is rotated by a motor (not shown) in a direction shown by an arrow R.

The carrier route trough 4 supporting a carrier route portion 1a of the conveyor belt 1 from below and the return route trough 5 supporting a return route portion 1b of the conveyor belt 1 from below are provided between the driving pulley 2 and the driven pulley 3. The return route trough 5 is provided under the carrier route trough 4.

A first belt inversion mechanism 8a configured to invert the belt by 180 degrees is provided between one of longitudinal direction end portions of the return route trough 5 and the driving pulley 2, and a second belt inversion mechanism 8b configured to invert the belt by 180 degrees is provided between the other longitudinal direction end portion of the return route trough 5 and the driven pulley 3. The first belt inversion mechanism 8a is provided at a movement direction upstream portion of the return route portion 1b of the conveyor belt 1 and inverts the conveyor belt 1 from a state where a conveyance surface (surface on which the conveyed materials F are placed) of the conveyor belt 1 faces downward to a state where the conveyance surface faces upward. The second belt inversion mechanism 8b is provided at a movement direction downstream portion of the return route portion 1b of the conveyor belt 1 and inverts the conveyor belt 1 from a state where the conveyance surface faces upward to a state where the conveyance surface faces downward. Each of the first and second belt inversion mechanisms 8a and 8b may be constituted by a plurality of rollers configured to twist the conveyor belt 1 to invert the conveyor belt 1.

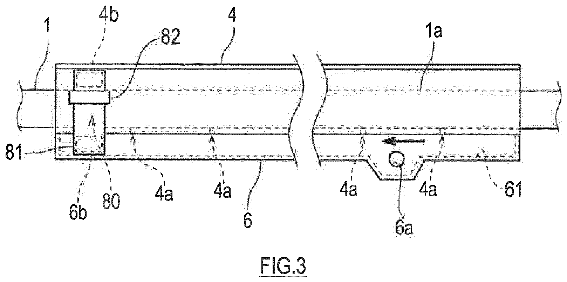

Fig. 3 is a schematic diagram showing a cross section of the carrier route trough 4 and the air supply header 6, the cross section being parallel to the conveyance direction of the conveyed materials F. As shown in Figs. 2 and 3, a cross section of the carrier route trough 4 has a substantially lower semi-circular arc shape. Further, the carrier route trough 4 has a gutter shape extending in parallel with the conveyance direction of the conveyed materials conveyed by the carrier route portion 1a of the conveyor belt 1. Air outlets 4a are provided at a bottom portion of the carrier route trough 4 so as to be line up in a longitudinal direction of the carrier route trough 4 at a predetermined pitch.

The air supply header 6 is provided at a lower portion of the carrier route trough 4 so as to extend along the longitudinal direction of the carrier route trough 4. At least one air supply header 6 is provided for one carrier route trough 4. In the present embodiment, a plurality of air supply headers 6 are provided in series. A header chamber 61 communicating with the air outlets 4a is formed inside each air supply header 6.

An air supply port 6a is provided at the air supply header 6. The air pressure-fed from the blower 10 is introduced to the header chamber 61 through the air supply port 6a. The air supply port 6a and the blower 10 are connected to each other through a pipe 11 and the like. In the carrier route trough 4 according to the present embodiment, the air supply port 6a is provided at the lower portion of the carrier route trough 4 and is open downward. However, the position of the air supply port 6a is not limited to the present embodiment.

Further, an inlet 6b of a discharge passage 80 is open at a longitudinal direction end portion of the air supply header 6. The inlet 6b of the discharge passage 80 is desired to be provided at a position away from the air supply port 6a in a longitudinal direction of the air supply header 6. The inlet 6b of the discharge passage 80 is open laterally at a side portion of the air supply header 6. An opening area of the inlet 6b of the discharge passage 80 is adequately larger than an opening area of each air outlet 4a.

An outlet 4b of the discharge passage 80 is open on an upper surface of the carrier route trough 4 and located higher than the conveyance surface of the conveyor belt 1. The outlet 4b and the inlet 6b are connected to each other by a duct 81. The discharge passage 80 connecting the inlet 6b and the outlet 4b is formed by the duct 81. A passage cross sectional area of the discharge passage 80 formed by the duct 81 is adequately larger than the opening area of each air outlet 4a.

In the present embodiment, the duct 81 is arranged so as to extend from the air supply header 6 along a lower surface of the carrier route trough 4. The discharge passage 80 is provided at one longitudinal direction end portion of the air supply header 6. However, when the air supply port 6a is provided at a longitudinal direction middle portion of the air supply header 6, the discharge passages 80 may be provided at both respective longitudinal direction end portions of the air supply header 6.

An opening/closing device 82 switches open and close of the discharge passage 80. When the discharge passage 80 is open, the air and the dust that moves together with the air are allowed to move from the inlet 6b of the discharge passage 80 to the outlet 4b of the discharge passage 80. When the discharge passage 80 is closed, the air and the dust that moves together with the air are inhibited from moving from the inlet 6b of the discharge passage 80 to the outlet 4b of the discharge passage 80. The opening/closing device 82 is desired to include a structure capable of hermetically sealing the opening/closing device 82 when the opening/closing device 82 closes the discharge passage 80.

The opening/closing device 82 is not limited as long as it is a device, such as a slide shutter or a valve, configured to switch open and close of the opening/closing device 82. The opening/closing device 82 may be an automatic device or a manual device. When the opening/closing device 82 is a manual device, an operation tool of the opening/closing device 82 is provided outside the casing 20.

A cross section of the return route trough 5 has a substantially lower semi-circular arc shape. Further, the return route trough 5 has a gutter shape extending in parallel with the conveyance direction of the conveyed materials F conveyed by the return route portion 1b of the conveyor belt 1. Air outlets 5a are provided at a bottom portion of the return route trough 5 so as to be lined up in a longitudinal direction of the return route trough 5 at a predetermined pitch. To be specific, the return route trough 5 is substantially the same in configuration as the carrier route trough 4.

The air supply header 7 is provided at a lower portion of the return route trough 5 so as to extend along the longitudinal direction of the return route trough 5. A plurality of air supply headers 7 lined up in series may be provided for one return route trough 5. A header chamber 71 communicating with the air outlets 5a is formed inside each air supply header 7.

An air supply port 7a is provided at the air supply header 7. The air pressure-fed from the blower 10 is introduced to the header chamber 71 through the air supply port 7a. The air supply port 7a and the blower 10 are connected to each other by the pipe 11 and the like. The air supply header 7 is substantially the same in configuration as the air supply header 6 except that the discharge passage 80 (duct 81) is not provided at the air supply header 7.

The conveyor main body Cm, the carrier route trough 4, the return route trough 5, and the air supply headers 6 and 7 are accommodated in the casing 20. An inlet 21 for the conveyed materials F to be supplied to the conveyor belt 1 and an outlet 22 for the conveyed materials F having been conveyed by the conveyor belt 1 are provided at the casing 20. A dust collecting fan 24 is connected to the casing 20 through a bag filter 23.

One example of an operation of the air floating belt conveyor apparatus 100 will be explained.

First, the blower 10 and the dust collecting fan 24 are driven. The air pressure-fed from the blower 10 through the pipe 11 to the header chambers 61 of the air supply headers 6 flows out through the air outlets 4a to between the upper surface of the carrier route trough 4 and a non-conveyance surface of the carrier route portion 1a of the conveyor belt 1 to make the conveyor belt 1 float. Similarly, the air pressure-fed from the blower 10 through the pipe 11 to the header chambers 71 of the air supply headers 7 flows out through the air outlets 5a to between an upper surface of the return route trough 5 and a non-conveyance surface of the return route portion 1b of the conveyor belt 1 to make the conveyor belt 1 float.

Next, a motor of the conveyor main body Cm is driven, and the driving pulley 2 is rotated in the direction shown by the arrow R. The conveyor belt 1 rotates between the driving pulley 2 and the driven pulley 3 by the rotation of the driving pulley 2. The conveyor belt 1 conveys the conveyed materials F, supplied from the inlet 21, toward the driving pulley 2 and discharges the conveyed materials F from the outlet 22. The dust generated from the conveyed materials F which are being conveyed by the conveyor belt 1 is collected by the bag filter 23 by forced discharge in the casing 20 by the dust collecting fan 24.

When stopping the air floating belt conveyor apparatus 100, the motor of the conveyor main body Cm is stopped, and the driving of the blower 10 and the dust collecting fan 24 is stopped. With this, the dust flying in the casing 20 settles. Most of the dust falls on the conveyor belt 1, but some of the dust falls on the upper surface of the carrier route trough 4. Part of the dust which has fallen on the upper surface of the carrier route trough 4 passes through between the conveyor belt 1 and the upper surface of the carrier route trough 4 and then through the air outlets 4a to fall into the header chambers 61 of the air supply headers 6. Thus, dust D is accumulated in the header chambers 61 although the amount of dust getting into the header chambers 61 is small.

Therefore, the header chambers 61 are cleaned on a regular basis, i.e., for every relatively-long period, such as every year to every several years, and with this, the dust D accumulated in the header chambers 61 is removed. Specifically, when the air floating belt conveyor apparatus 100 is in a stop state, the opening/closing devices 82 are operated to open the discharge passages 80, and the blower 10 is driven to pressure-feed the air to the header chambers 61 of the air supply headers 6. It is desirable that: a valve configured to switch between the supply of the air to the air supply port 6a and the stop of the supply of the air to the air supply port 6a is provided at the pipe 11 connecting the air supply port 6a of the air supply header 6 and the blower 10; a valve configured to switch between the supply of the air to the air supply port 7a and the stop of the supply of the air to the air supply port 7a is provided at the pipe 11 connecting the air supply port 7a of the air supply header 7 and the blower 10; and the air is selectively supplied to the air supply header 6 to be cleaned.

The opening area of the inlet 6b of the discharge passage 80 is adequately larger than the opening area of each air outlet 4a. Therefore, the air flowing through the air supply port 6a into the header chamber 61 flows through the inlet 6b to the discharge passage 80. By the air flow generated in the header chamber 61, the dust D accumulated in the header chamber 61 flies, and the flying dust D flows through the inlet 6b to the discharge passage 80 in accordance with the air flow.

The dust which has flowed into the discharge passage 80 is carried by the air flow to the outlet 4b to flow out from the outlet 4b. The outlet 4b of the discharge passage 80 is open in a horizontal direction or an obliquely upper direction. The dust which has flowed out from the outlet 4b of the discharge passage 80 falls on the conveyance surface of the carrier route portion 1a of the conveyor belt 1. The dust which has fallen on the conveyance surface of the conveyor belt 1 is conveyed by the conveyor belt 1 together with the conveyed materials when the conveyor belt 1 is rotated next time.

As described above, the air floating belt conveyor apparatus 100 of the present embodiment includes: the conveyor main body Cm including the endless conveyor belt 1 and configured to convey the conveyed materials F, placed on the conveyance surface of the conveyor belt 1, in a predetermined direction; the carrier route trough 4 (carrier route belt supporting body) supporting the carrier route portion 1a of the conveyor belt 1 from below and including a plurality of air outlets 4a through which the air for making the conveyor belt 1 float flows out to between the upper surface of the carrier route trough 4 and the non-conveyance surface of the conveyor belt 1; at least one air supply header 6 including the header chamber 61 communicating with the plurality of air outlets 4a, the at least one air supply header 6 being provided at a lower portion of the carrier route trough 4; and the blower 10 configured to supply the air to the air supply header 6. The air floating belt conveyor apparatus 100 further includes: the duct 81 forming the discharge passage 80, the discharge passage 80 connecting the inlet 6b and the outlet 4b, the inlet 6b being open at the header chamber 61, the outlet 4b being open on the upper surface of the carrier route trough 4 and located higher than the conveyance surface of the conveyor belt 1, the dust accumulated in the header chamber 61 being introduced by the discharge passage 80 from the inlet 6b to the outlet 4b; and the opening/closing device 82 configured to open and close the discharge passage 80.

According to the above configuration, when the conveyor belt 1 is in a stop state, the opening/closing device 82 is operated to open the discharge passage 80, and the air is supplied to the header chamber 61 by the blower 10. With this, the dust accumulated in the header chamber 61 flies by the flow of the air and is discharged through the discharge passage 80 to an upper side of the conveyance surface of the conveyor belt 1 in accordance with the flow of the air. The discharged dust falls on the conveyance surface of the conveyor belt 1 and is conveyed by the conveyor belt 1 together with the conveyed materials F. The discharged dust is utilized effectively.

As above, the air floating belt conveyor apparatus 100 according to the present embodiment includes means for removing the dust accumulated in the air supply header 6 (header chamber 61).

In the air floating belt conveyor apparatus 100 of the present embodiment, the carrier route trough 4 (carrier route belt supporting body) has a circular-arc cross section perpendicular to the conveyance direction of the conveyed materials, and the duct 81 forms the discharge passage 80 extending in a circular-arc shape along a circular-arc outer periphery of the carrier route trough 4.

With this, the discharge passage 80 is a circular-arc passage extending from the inlet 6b at a lower side to the outlet 4b at an upper side. Therefore, the air flowing through the discharge passage 80 and the dust that moves together with the air are smoothly carried to the outlet 4b to be discharged from the outlet 4b.

The air floating belt conveyor apparatus 100 of the present embodiment includes: the return route trough 5 (return route belt supporting body) located under the carrier route trough 4 (carrier route belt supporting body) and supporting the return route portion 1b of the conveyor belt 1; and the belt inversion mechanisms 8a and 8b configured to invert the conveyor belt 1 such that the conveyance surface of the conveyor belt 1 passing through the return route trough 5 faces upward.

The dust which has fallen on the conveyor belt 1 and conveyed together with the conveyed materials separates from the conveyance surface of the conveyor belt 1 at a turn portion of the conveyor belt 1. However, minute dust may be adhered to the conveyance surface and therefore may not separate from the conveyance surface. Even in such a case, the conveyor belt 1 is inverted such that the conveyance surface of the conveyor belt 1 passing through the return route trough 5 faces upward. Therefore, the dust can be prevented from being adhered to or falling on the upper surface of the return route trough 5.

The foregoing has explained a preferred embodiment of the present invention.

### Reference Signs List

- 1: conveyor belt
- 1 a: carrier route portion
- 1b: return route portion
- 2: driving pulley
- 3: driven pulley
- 4: carrier route trough (carrier route belt supporting body)
- 4a: air outlet
- 4b: outlet (of discharge passage)
- 5: return route trough (return route belt supporting body)
- 5a: air outlet
- 6: air supply header
- 6a: air supply port
- 6b: inlet (of discharge passage)
- 7: air supply header
- 7a: air supply port
- 8a, 8b: belt inversion mechanism
- 10: blower
- 20: casing
- 21: inlet
- 22: outlet
- 23: bag filter
- 24: dust collecting fan
- 61, 71: header chamber
- 80: discharge passage
- 81: duct
- 82: opening/closing device
- 100: air floating belt conveyor apparatus
- Cm: conveyor main body
- F: conveyed material
- D: (accumulated) dust

## Claims

1. An air floating belt conveyor apparatus (100) comprising:
a conveyor main body (Cm) including an endless conveyor belt (1) and configured to convey conveyed materials (F), placed on a conveyance surface of the conveyor belt (1), in a predetermined direction;
a carrier route belt supporting body (4) supporting a carrier route portion (1a) of the conveyor belt (1) from below and including a plurality of air outlets (4a) through which air for making the conveyor belt (1) float flows out to between an upper surface of the carrier route belt supporting body (4) and a non-conveyance surface of the conveyor belt (1);
at least one air supply header (6) including a header chamber (61) communicating with the plurality of air outlets (4a), the at least one air supply header (6) being provided at a lower portion of the carrier route belt supporting body (4);
a blower (10) configured to supply the air to the air supply header (6);
a duct (81) forming a discharge passage (80), the discharge passage (80) connecting an inlet (6a) and an outlet (4b), the inlet (6a) being open at the header chamber (61), **characterised by** the outlet (4b) being open on the upper surface of the carrier route belt supporting body (4) and located higher than the conveyance surface of the conveyor belt (1), dust accumulated in the header chamber (61) being introduced by the discharge passage (80) from the inlet (6a) to the outlet (4b); and
an opening/closing device (82) configured to open and close the discharge passage (80).

2. The air floating belt conveyor apparatus (100) according to claim 1, wherein:
the carrier route belt supporting body (4) has a circular-arc cross section perpendicular to a conveyance direction of the conveyed materials; and
the duct (81) forms the discharge passage (80) extending in a circular-arc shape along a circular-arc outer periphery of the carrier route belt supporting body (4).

3. The air floating belt conveyor apparatus (100) according to claim 1 or 2, further comprising:
a return route belt supporting body (5) located under the carrier route belt supporting body (4) and supporting a return route portion (1b) of the conveyor belt (1); and
a belt inversion mechanism (8a, 8b) configured to invert the conveyor belt (1) such that the conveyance surface of the conveyor belt (1) passing through the return route belt supporting body (5) faces upward.

## Patentansprüche

1. Luftgelagerte Bandfördereinrichtung (100), umfassend:
einen Beförderungshauptkörper (Cm), der ein Endlosförderband (1) beinhaltet und konfiguriert ist, beförderte Materialien (F), die auf einer Beförderungsoberfläche des Förderbands (1) platziert sind, in einer vorgegebenen Richtung zu befördern;
einen Trägerführungsbandstützkörper (4), der einen Trägerführungsabschnitt (1a) des Förderbands (1) von unterhalb stützt und eine Vielzahl von Luftauslässen (4a) beinhaltet, durch die Luft, um das Förderband (1) gleiten zu lassen, zwischen eine obere Oberfläche des Trägerführungsbandstützkörpers (4) und eine Nichtbeförderungsoberfläche des Förderbands (1) ausströmt;
mindestens einen Luftzufuhrkrümmer (6), der eine Krümmerkammer (61) beinhaltet, die mit der Vielzahl von Luftauslässen (4a) kommuniziert, wobei der mindestens eine Luftzufuhrkrümmer (6) bei einem unteren Abschnitt des Trägerführungsbandstützkörpers (4) bereitgestellt ist;
ein Gebläse (10), das konfiguriert ist, die Luft an den Luftzufuhrkrümmer (6) zuzuführen;
eine Leitung (81), die einen Abgabedurchlass (80) bildet, wobei der Abgabedurchlass (80) einen Einlass (6a) und einen Auslass (4b) verbindet, wobei der Einlass (6a) bei der Krümmerkammer (61) offen ist,
**dadurch gekennzeichnet, dass** der Auslass (4b) an der oberen Oberfläche des Trägerführungsbandstützkörpers (4) offen ist und höher als die Beförderungsoberfläche des Förderbands (1) liegt, wobei Staub, der sich in der Krümmerkammer (61) ansammelt, durch den Abgabedurchlass (80) von dem Einlass (6a) zu dem Auslass (4b) eingeleitet wird; und
eine Öffnungs-/Schließvorrichtung (82), die konfiguriert ist, den Abgabedurchlass (80) zu öffnen und schließen.

2. Luftgelagerte Bandfördereinrichtung (100) nach Anspruch 1, wobei:
der Trägerführungsbandstützkörper (4) einen kreisbogenförmigen Querschnitt senkrecht zu einer Beförderungsrichtung der beförderten Materialien aufweist; und
die Leitung (81) den Abgabedurchlass (80) bildet, der sich in einer Kreisbogenform entlang eines kreisbogenförmigen Außenumfangs des Trägerführungsbandstützkörpers (4) erstreckt.

3. Luftgelagerte Bandfördereinrichtung (100) nach Anspruch 1 oder 2, weiter umfassend
einen Rückführungsbandstützkörper (5), der unter dem Trägerführungsbandstützkörper (4) liegt und einen Rückführungsabschnitt (1b) des Förderbands (1) stützt; und
einen Bandumkehrmechanismus (8a, 8b), der konfiguriert ist, das Förderband (1) derart umzukehren, dass die Beförderungsoberfläche des Förderbands (1), das durch den Rückführungsbandstützkörper (5) läuft, nach oben zeigt.

## Revendications

1. Appareil de transporteur à bande à aérosustentation (100) comprenant :
un corps principal de transporteur (Cm) incluant une bande transporteuse sans fin (1) et configuré pour transporter des matériaux (F) transportés, placés sur une surface de transport de la bande transporteuse (1), dans une direction prédéterminée ;
un corps de support de bande pour voie porteuse (4) supportant une portion voie porteuse (1a) de la bande transporteuse (1) par en dessous et incluant une pluralité de sorties d'air (4a) à travers lesquelles de l'air destiné à faire flotter la bande transporteuse (1) s'écoule jusqu'entre une surface supérieure du corps de support de bande pour voie porteuse (4) et une surface de non-transport de la bande transporteuse (1) ;
au moins un collecteur d'alimentation en air (6) incluant une chambre de collecteur (61) communiquant avec la pluralité de sorties d'air (4a), l'au moins un collecteur d'alimentation en air (6) étant situé au niveau d'une portion inférieure du corps de support de bande pour voie porteuse (4) ;
une soufflante (10) configurée pour apporter l'air jusqu'au collecteur d'alimentation en air (6) ;
un conduit (81) formant un passage d'évacuation (80), le passage d'évacuation (80) raccordant une entrée (6a) et une sortie (4b), l'entrée (6a) étant ouverte au niveau de la chambre de collecteur (61),
**caractérisé en ce que** la sortie (4b) est ouverte sur la surface supérieure du corps de support de bande pour voie porteuse (4) et se trouve plus haut que la surface de transport de la bande transporteuse (1), la poussière accumulée dans la chambre de collecteur (61) étant introduite par le passage d'évacuation (80) depuis l'entrée (6a) vers la sortie (4b) ; et
un dispositif d'ouverture/fermeture (82) configuré pour ouvrir et fermer le passage d'évacuation (80).

2. Appareil de transporteur à bande à aérosustentation (100) selon la revendication 1, dans lequel :
le corps de support de bande pour voie porteuse (4) présente une section transversale en arc de cercle perpendiculaire à une direction de transport des matériaux transportés ; et
le conduit (81) forme le passage d'évacuation (80) s'étendant selon une forme d'arc de cercle le long d'une périphérie extérieure en arc de cercle du corps de support de bande pour voie porteuse (4).

3. Appareil de transporteur à bande à aérosustentation (100) selon la revendication 1 ou 2, comprenant en outre :
un corps de support de bande pour voie de retour (5) se trouvant sous le corps de support de bande pour voie porteuse (4) et supportant une portion voie de retour (1b) de la bande transporteuse (1) ; et
un mécanisme d'inversion de bande (8a, 8b) configuré pour inverser la bande transporteuse (1) de telle sorte que la surface de transport de la bande transporteuse (1) traversant le corps de support de bande pour voie de retour (5) est tournée vers le haut.
